# EUROPEAN PATENT APPLICATION

(11) **EP 2 824 950 A1**
(43) Date of publication of application: **14.01.2015**
(21) Application number: 13380030.0
(22) Date of filing: 12.07.2013
(51) Int. Cl.: H04W 4/18

(54) **Method for selecting a cellular network service for mobile communication**

(71) Applicant: Innovacion Y Soluciones Creativas, S.L., 42003 Soria (ES)
(72) Inventor: Bartolomé, Iván Herrero, 48980 Santurtzi (ES); Maján, Carlos Labanda, 42004 Soria (ES)
(74) Representative: Lehmann Novo, Maria Isabel

(57) **Abstract**

The invention relates to a method for selecting a cellular network service for mobile communication of a wireless communication device, comprising the steps of determining operation data; determining user data, said user data comprising information of a user and/or wireless communication preferences of a user; determining services data, said services data comprising identification information of services and service properties; comparing said services data with said operation data and/or said user data; identifying services, wherein said services data match with said operation data and/or said user data; and selecting at least one of the matching services.

## Description

The present invention relates to a method for selecting a cellular network service for mobile communication of a wireless communication device; in particular of mobile phones and other electronic devices configured to wirelessly connect to a cellular network.

Cellular network services allow a wireless communication device to wirelessly connect to a cellular network and to transmit and receive data via said cellular network; e.g., the device can connect to the Internet. Services are offered by service providers, in particular mobile phone service providers, under specific conditions and service rates. Services are defined through service properties, technical as well as administrative and organizational properties. Service properties might include service rates, level of wireless coverage for voice and data by the cellular network, call quality, customer care and the quality/price ratio.

According to the state of the art, a user has to make a contract for a particular service with a service provider. Normally, such contract lasts for a predetermined time, wherein the type of service cannot be changed within the life time of the contract. In many cases, the change of the contract requires - if possible - a written request sent to the service provider. Changing the current service might be subject to a fee or payment of a fine.

Generally, services offered by service providers are standardized and not adaptable to the particular needs of a user.

Another disadvantage is apparent when a user is not satisfied with the service provider's services. In this case, the reputation of the service provider could suffer and be damaged, and fewer users would desire to become customers of this service provider. As a result, the service provider would earn less money rendering it unprofitable. A service provider is therefore oriented to provide services which satisfy customer needs (if possible, even of each single costumer), but concurrently keeping costs like organization, maintenance and investments at bay. Furthermore, a company like the service provider cultivates a specific reputation for, for example, high quality connection, good customer care and more and therefore likes to attract a specific kind of customers. Also offering specific services, e.g., only city wide coverage of wireless communication, demands an attraction of said specific customers. By advertising via television, website and radio, no specific offer can be sent to the preferred possible customers directly.

Therefore, the object of the present invention is to provide a method for selecting a cellular network service for mobile communication, which overcomes the above-mentioned disadvantages. Favorably, a method is provided which allows for a quick overview and selection of services for a user, adaption and presentation of services by the service providers and which is a simple and inexpensive implementation for wireless communication devices of a user. Other advantages and effects will be apparent in the following description of the invention.

This object is accomplished according to the subject-matter of the present invention with the features as defined in claim 1. Accordingly, a method is provided for selecting a cellular network service for mobile communication of a wireless communication device, comprising the steps of
determining operation data;
determining user data, said user data comprising information of a user and/or wireless communication preferences of a user;
determining services data, said services data comprising identification information of services and service properties;
comparing said services data with said operation data and/or said user data; identifying services, wherein said services data match with said operation data and/or said user data; and
selecting at least one of the matching services.

The resulting method has the advantage that a small number of processing steps can be quickly and simply performed on any wireless communication device. No large storage and computing capabilities are required for the wireless communication device. Favorably, the simplest and least intensive processing steps are performed on the wireless communication device like determining operation data and/or user data and selecting matching services. Nevertheless, the resulting identified services are based on a collection of various and multiple data, and therefore present a precise and extensive overview of services adequate for the user's needs. In particular, the matching of the data does not necessarily restrict the identified services, wherein the operation data and/or user data are identical to the services data. In addition or alternatively, matching services data with the operation data and/or user data means comparing said data within a specific range of values and identifying services means setting all available services or a plurality of services in order or sequence according to the previously performed comparison step. According to the invention, the services data comprise public tariff plans and, optionally, offers only made to a user of the wireless communication device or to a user profile which might comprise a plurality of users. Thus, user data can also be compared with the service data. In another embodiment, either the operation data or the user data is determined, since additional data is not required for the comparison step. In this way, the processing load is reduced.

Favorable aspects of the invention are presented in the dependent claims.

In another aspect of the invention, said step of determining operation data comprises receiving operation data from said wireless communication device and/or from said at least one cellular network service.

The possibility to receive said operation data from the wireless communication device alone reduces the load of the link to the cellular network and the processing load of the cellular network. In the other case, when said operation data is received from said cellular network services, the same advantages apply for the wireless communication device. When both wireless communication device and cellular network service provide the operation data, a clear and precise statistic of the user's wireless communication behavior is at hand which helps to better identify adequate services in the identifying step. The operation data comprises logged data, such as duration times about the connection to the cellular network services, even to specific numbers, amount of downloaded and uploaded data, the kind of connection (high-/low-speed) and location information about where the wireless communication device was located and/or was connected to a cellular network. Additional logged historical data is also able to be part of the operation data. The data can refer to detailed, averaged or accumulated data for a specific time period, like e.g. a year, a month, a day or an hour.

Favorably, the step of determining user data comprises receiving user data from said wireless communication device as user input and/or from said at least one cellular network service.

Receiving user data only from said wireless communication device has the advantage that the user can specify which information he likes to provide and present for the evaluation of matching services. In the other case, when said cellular network services provide and send the user data, the user does not need to input any additional user information. This information can originate from a contract the user currently has or previously had with a service provider. When both wireless communication device and cellular network service provide the user data, a clearer and more precise profile of the user is available for identifying matching services.

In another aspect of the invention, the step of determining services data comprises receiving services data from at least one server unit storing information of said services.

In this case, the server unit has the advantage to provide an easier access for service providers in comparison to an access to the wireless communication device. Thus, the service providers can store their services and corresponding service properties on the server unit. In addition, third parties can store data regarding their opinion, assessment and experience about the service providers, services and service properties. A server unit comprises a storage unit which is large enough to easily store the large amount of services data regarding the service and the service properties. The services data provide information about service properties. Information about the consumption of the users as part of the operation data, as well as the services and tariffs of the operators as part of services data are stored in the server unit.

Favorably, prior to said step of receiving services data from a/the server unit, the following steps are performed:
sending said operation data and/or said user data to said server unit by a client device, in particular by the wireless communication device;
Filtering said sent data identifying the services that fulfill the connectivity needs of the user based on said sent data; and filtering said sent data based on at least one filter property; and generating said services data based on said filtered data and/or filter property selecting the best choices among the said identified services.

The favorable filtering and generating steps are performed on the server unit and help reduce the processing load of the wireless communication device. In addition, a user can be evaluated by said filtering step whether a service provider would like to offer a service to him. In case of a plurality of users, the service provider can filter said users according to specific filter properties based on operation data and/or user data; in particular, specific user profiles, long-distance or short-distance callers, long time or short time callers, and so on. This allows the service providers to generate a service which fits a specific group of users.

Favorably, said at least one filter property is set by a server operator; and wherein said services data comprises wireless service rates and discounts input by said server operator.

Due to the individually set filter property, the server operator can individually determine whether a user is within a search grid of a service provider looking for specific possible customers. This search grid comprises said filter properties, in particular a range of values for each filter property. The server operator sets a filter property, in particular a specific value or range of values for one or more parameters. Favorably, based on said filtering step users are identified as preferred and promising customers. Afterwards, individual service offers with individual wireless service rates and/or discounts might be generated for each user by said server operator. Alternatively, services are generated and offered to a plurality of users fitting the filter criteria.

In another aspect of the invention, the steps of comparing said services data with said operation data and/or said user data and of identifying services are performed by a/the server unit.

Advantageously, the wireless communication device does not require high computing capabilities since the processing is performed by the server unit. This fact reduces costs of a wireless communication device, renders many wireless communication devices capable to adapt said method, and has less impact on the battery operation time.

Favorably, the steps of comparing said services data with said operation data and/or said user data and of identifying services are performed on said wireless communication device.

As a result, the wireless communication device can independently process the data without requiring a link to the server unit. Thus the selection of a service can be performed even if no mobile communication is available due to lack of a current service or a cellular network. Further, the result of the comparison and the decision-making is not leaked to other third parties, like service providers. Eventually, a server unit which may mainly provide the services data requires storage units to store the services data, but not necessarily high computing performance to execute the comparing and identifying steps. Thus, costs for the server unit can be reduced and the structure of a server unit is simplified. Favorably, after the step of identifying services, the method depends on the communication with the server unit when the user has selected said at least one matching service. Then a notification is sent to the server unit, so that the server unit is configured to forward the necessary data to the operator in order that the contracting of the service may be legalized. The contracting may be made automatically o it may be required that the operator uses the data received in order to contact the user and continues with the process.

Favorably, the step of selecting at least one of the matching services comprises displaying said identified services on said wireless communication device; and receiving a user input selecting at least one of the matching services from said identified services.

Advantageously, the user is able to independently choose and select a service fitting best to his needs or preferences.

The present invention further relates to a computer-readable medium having computer executable instructions adapted to cause a computer to perform the method described herein.

The present invention also relates to a wireless communication device configured for mobile communication with a plurality of cellular network services, comprising an operation data register unit configured to log operation data;
a user data register unit configured to store user data, said user data comprising information of a user and/or wireless communication preferences of a user;
a wireless transceiver unit configured
a) to transmit said operation data and said user data to a server unit,
b) to request service data of services;
c) to receive the service data from said server unit;
a display unit configured to display said received service data; and
an input unit configured to receive a user input selecting at least one service from said displayed services.

In another aspect of the invention, said wireless communication device is further configured to select at least one of the services for mobile communication based on said wireless communication preferences of said user.

Due to the stored wireless communication preferences, a user is not required to manually select the received service data. Instead, the wireless communication device automatically selects at least one of the received services based on said wireless communication preferences, in particular, those which match with the wireless communication preferences. Alternatively, the user is required to make the selection manually, as it concerns a process of service contracting that has to be authorized in an explicit manner.

The present invention also relates to a wireless communication system comprising at least one wireless communication device as mentioned above and a server unit configured to communicate with said at least one wireless communication device, comprising:
a transceiver unit configured
   a) to receive operation data comprising operation information of said wireless communication device, and/or
   b) to receive user data comprising information of a user and/or wireless communication preferences of a user;
wherein said server unit (4) is further configured to generate statistical data based on said operation data and/or user data.

The generated statistical data help identifying preferred communication behavior of users or user profiles utilizing wireless communication and are generated by e.g. averaging detailed operation data and/or user data. In particular, a distribution function can be set and used, which comprises said operation data and/or user data.

Favorably, said server unit (4) further comprises
a comparing unit configured to compare services data with said operation data and/or said user data, said services data comprising identification information of services and service properties; and
an identification unit for identifying services data which match with said operation data and/or said user data;
wherein said server unit is further configured to transmit said identified services data to said wireless communication device.

Such a system provides the same advantages like the above-mentioned method. In this favorable embodiment, the wireless communication device is adapted to provide relevant user data and operation data, while the server unit calculates, identifies and sends matching services to the wireless communication device. In this way, the wireless communication device requires less processing power and saves battery power.

Favorably, said server unit further comprises
an input unit configured to receive an input; and
a filtering unit configured to filter said received data based on said input; whereby said services data are generated and/or adapted based on said filtered data.

Favorably, said services data comprises wireless service rates and discounts of the at least one cellular network service.

In an alternative embodiment of a wireless communication system, the server unit merely provides services data and does not receive any data from the wireless communication. In this case, the wireless communication device determines the operation data and user data, compares services data and identifies and selects services.

In this way, the wireless communication device is independent of the performance power of the server unit and only requires updated services data, if necessary.

In the following, figures are presented as embodiments or aspects of the present invention which do not restrict the subject-matter and provide additional explanatory details of the invention.
- Fig. 1: shows a wireless communication system of the present invention,
- Fig. 2: shows a process diagram of a method of the present invention,
- Fig. 3: shows a wireless communication device of the present invention,
- Fig. 4: shows a server unit according to the present invention,
- Fix. 5: shows another process diagram of a method of the present invention, wherein a first communication between a wireless communication device and a server unit is presented,
- Fig. 6: shows another process diagram of a method of the present invention, wherein a communication between a server unit and a terminal unit is presented,
- Fig. 7: shows another process diagram of a method of the present invention, wherein a second communication between a wireless communication device and a server unit is shown, and
- Fig. 8: shows another process diagram of a method of the present invention, wherein a third communication between a wireless communication device and a server unit is shown.

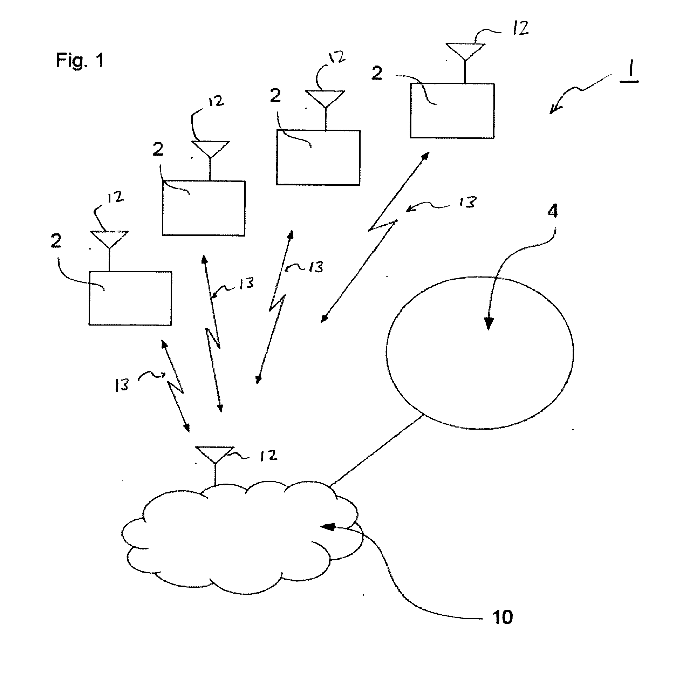

Fig. 1 shows a wireless communication system 1 of the present invention comprising a plurality of wireless communication devices 2 and a server unit 4. Each of the wireless communication devices 2 comprises a wireless transceiver unit including an antenna 12 and is operable to wirelessly connect based on a wireless communication link 13 via a cellular network 10 to the server unit 4 and to transmit data to and receive data from the server unit 4 and the cellular network 10. The wireless communication link 13 between wireless communication device 2 and cellular network 10 is a data link adapted to transmit data in both directions. The cellular network 10 comprises a wireless transceiver unit including an antenna 12 and is operable to provide wireless communication link coverage over an area for the wireless communication devices 2. The server unit 4 is connected to and can be part of the cellular network 10.

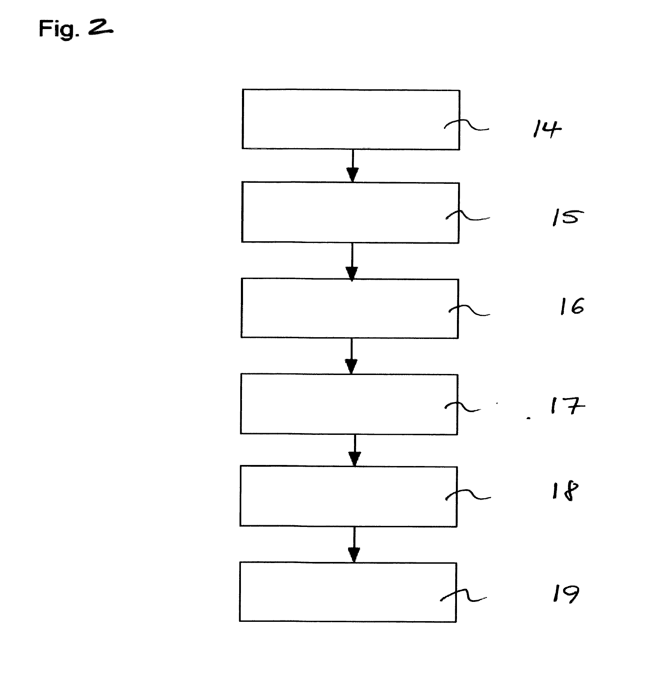

Fig. 2 shows a process diagram of a method of the present invention comprising the successive steps of determining operation data (step 14); determining user data (step 15), said user data comprising information of a user and/or wireless communication preferences of a user; determining services data (step 16), said services data comprising identification information of services and service properties; comparing said services data with said operation data and/or said user data (step 17); identifying services (step 18), wherein said services data is matched with said operation data and/or said user data; and selecting at least one of the matching services (step 19). These method steps can be performed by the wireless communication device 2 and/or by the server unit 4; preferably by both units concurrently, whereby each step is preferably performed only by one unit.

The steps are now described in detail: In step 14, the operation data is determined by, for example, reading logged data from a history register. In step 15, the user data is determined by, for example, reading a user input. In step 16, the services data is determined by, for example, reading a list of services of service providers. In step 17, the services data are compared with the operation data and/or the user data, whereby the services are marked as different, equal or similar to the operation data and/or user data. In step 18, the services are identified which are equal or at least similar to the operation data and/or user data. In particular, services which achieve to cover the communication need of the user are identified. The identified services are a match for said data. In step 19, a service is selected out of a list of at least one of the matching services.

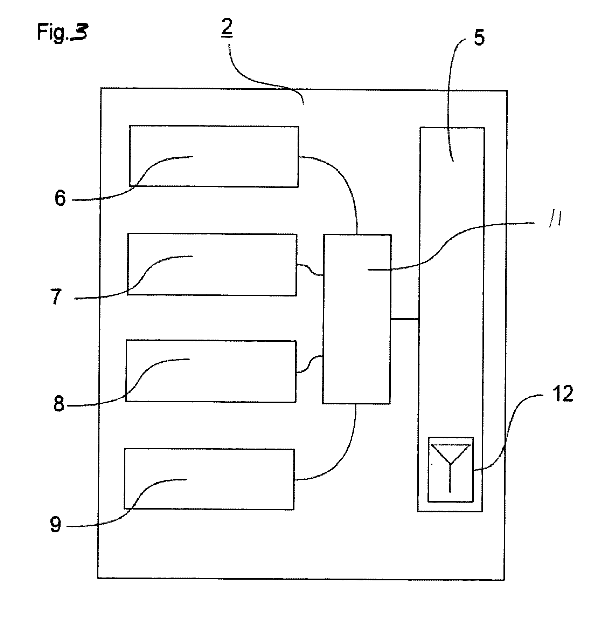

Fig. 3 shows a wireless communication device 2 of the present invention, which is presented in Fig. 1 as a part of the wireless communication system 1. The wireless communication device 2 is configured for mobile communication with a plurality of cellular network services. The wireless communication device 2 comprises an operation data register unit 6, a user data register unit 7, a wireless transceiver unit 5, a display unit 8, an input unit 9, a calculating unit 11 and a storage unit (not shown). Each of the units 5 to 9 are connected with the calculation unit 11.

In detail, the operation data register unit 6 is configured to log operation data. The user data register unit 7 is configured to store user data, said user data comprising information of a user and/or wireless communication preferences of a user. The wireless transceiver unit 5 is configured to transmit said operation data and said user data to a server unit 4 and to receive identified services from said server unit 4, said identified services comprising services data that match with said operation data and/or said user data. The display unit 8 is configured to display said identified services. The input unit 9 is configured to receive a user input selecting at least one matching service from said displayed identified services. As soon as the selection input from the user is received, the selection of the service is transmitted to the server unit or directly to the operator in order to start the contracting process.

In another embodiment, the operation data register unit 6 and the user data register unit 7 are implemented in the storage unit.

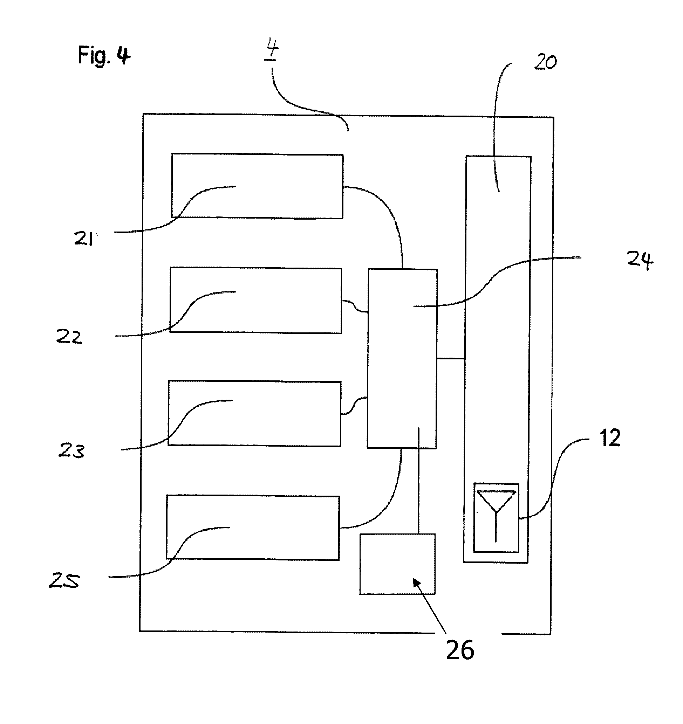

Fig. 4 shows the server unit 4 of the present invention, which is presented in Fig. 1 as a part of the wireless communication system 1. The server unit 4 is configured to communicate with said at least one wireless communication device 2. The server unit 4 comprises a transceiver unit 20, an input unit 21, a filtering unit 22, a comparing unit 23, a calculation unit 24 and a storage unit 25. Each of the units 20 to 23 and 24 are connected with the calculation unit 24.

In detail, the transceiver unit 20 is configured to communicate with the wireless communication devices 2 and/or the cellular networks 10, in particular to receive operation data comprising information of wireless connection usage of said wireless communication device with at least one preceding cellular network service, to receive user data comprising information of a user and/or wireless communication preferences of a user, and to transmit identified service data. The transceiver unit 20 might include an antenna 12 for wireless communication. The input unit 21 is configured to receive a server operator input. The filtering unit 22 is configured to filter said received data based on said server operator input. The comparing unit 23 is configured to compare services data with said operation data and/or said user data, said services data comprising information of at least one mobile phone service and/or service properties. The calculation unit 24 is configured to organize the data transfer between the units and, if necessary, support the calculation of specific issues. The identification unit 26 is for identifying services data that match with said operation data and/or said user data. The server unit 4 is further configured to transmit said best match data to said wireless communication device.

In another embodiment, the filtering unit 22, the identification unit 26 and the comparing unit 23 are implemented in the calculation unit 24.

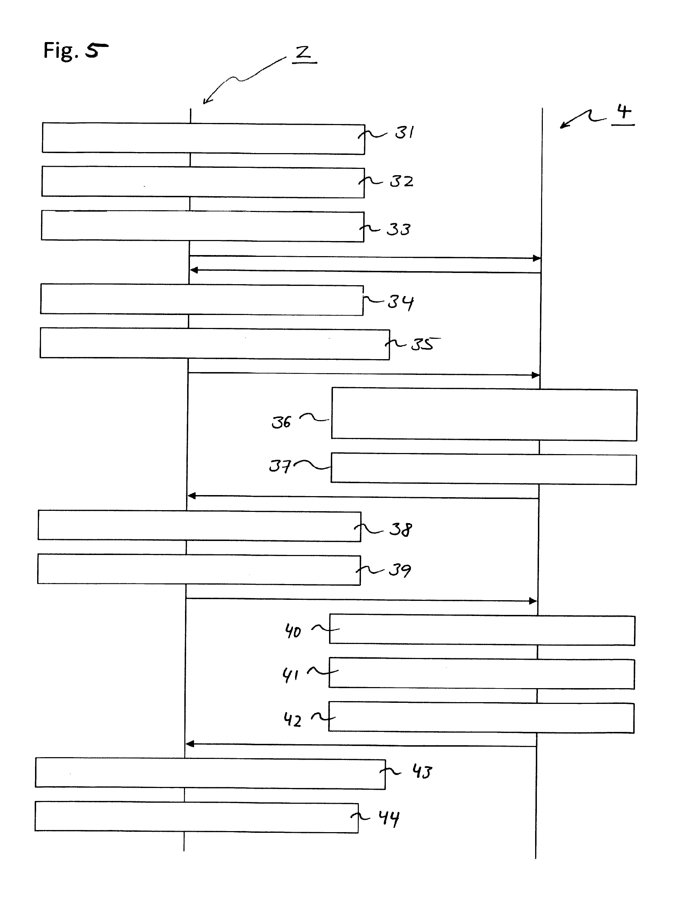

Fig. 5 shows another process diagram of a method of the present invention, wherein a first communication between a wireless communication device and a server unit is presented. This method is more detailed compared to the method of Fig. 1 and is performed by the wireless communication device 2 and the server unit 4. The method of Fig. 5 comprises the steps 31 to 44, whereby step 32 is part of step 15 of Fig. 2 - determining user data; the steps 22 to 25, optionally with 38 and 39, are part of step 14 - determining operation data; step 40 is part of step 17, step 41 is part of step 18 and steps 43 and 44 are part of step 19.

The steps are now described in detail. In step 31, an application adapted to instruct the wireless communication device 2 and the server unit 4 to perform the steps 32 to 44 is downloaded and installed on the wireless communication device 31. In step 32, the user of the wireless communication device 2 is identified, either by user input or by reading a SIM card. In step 33, an enquiry regarding the last call stored in the server unit 4 from a database of the server unit 4 is made and transmitted to the server unit 4. In step 34, after receiving the result of the enquiry from the server unit 4, the wireless communication device 2 reads the data of subsequent calls from a database of the wireless communication device 2. In step 35, the wireless communication device 2 registers the data of the subsequent calls in the database of the server unit 4. The steps 33 to 35 are an update process for the server unit 4, so that the recently made calls can be evaluated by the server unit 4. In step 36, the server unit 4 identifies the operator which is assigned to the user's number and to each of the numbers called by the user. In step 37, the application installed on the wireless communication device is notified of the concluded operation, in particular the assignment of the operator and the update process. In step 38, the user selects the data he wishes to be analyzed, in particular the amount of data and which kind of data. In step 39, the selected data is sent from the wireless communication device 2 to the server unit 4. In step 40, the most advantageous rates of services for the user are calculated by the server unit 4. In step 41, a filter is applied by the operator to the user. If the user fulfills any of the filters configured by the operator, discounts on the services are applied, as stated by the service provider for each filter. In step 42, the resulting data of the services are sent to the application of the wireless communication device 2, in particular services data comprising services with applied discounts. In step 43, the resulting data is displayed in order from the lowest to the highest rates. Alternatively, the services may be displayed in order according to other service properties such as, for example, wireless communication coverage. In step 44, a rate is selected and purchased by the user. During the purchase, the user receives authorization to access and connect to the cellular network based on the purchased service and the service provider receives authorization to debit the user's account. The authorization process can be performed manually or automatically without requiring further user input.

Additionally, a user may send wireless communication preferences to the server unit 4, wherein services such as services in a foreign country and/or for future purposes, e.g., a business trip, are requested. The server unit 4 compares and identifies services in this aspect. As soon as the user selects a service for a period of time in the future, the service is reserved and access authorized as soon as the specified deadline is reached or the user tries to login to the cellular network in the foreign country. The reservation of a service is either stored in the server unit 4, the wireless communication device 2, or at the service provider offering the service. If the reservation is stored at the service provider, the wireless communication device 2 and the server unit 4 do not require reminding the service provider and thus need less performance power and storage capability. If the reservation is stored on the wireless communication device 2, the selection and purchase request will be sent automatically in due time by the wireless communication device. In this way, a user can, for example, program his calendar identifying trips to foreign countries and concurrently make reservations for, favorably cheaper, foreign country services. An application, favorably the calendar application, may comprise an implemented routine which, as soon as a location different to a user's predetermined or usual location is selected in the appointments property, executes the method of the present invention to select a service. Accordingly, the user saves money and assures wireless communication coverage at this appointment.

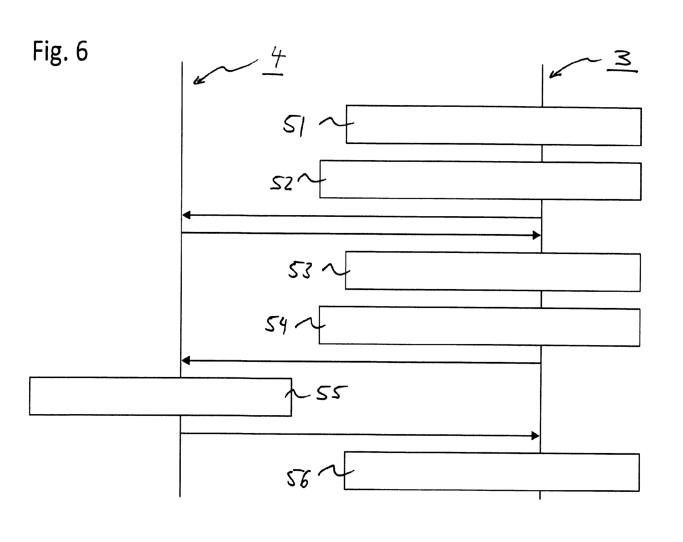

Fig. 6 shows another process diagram of a method of the present invention, wherein the communication between the server unit 4 and a terminal unit 3 is presented. The terminal unit 3 can be any kind of electronic device configured to connect to the server unit 4. The terminal unit 4 allows service providers to influence the resulting data shown in Fig. 5 by creating and applying filters for users utilizing the application. The filter comprises specific user properties like age, gender, and/or communication behavior. The method comprises the steps 51 to 56.

The steps are now described in detail. In step 51, a service provider logs in and accesses a web interface program. In step 52, the service provider creates a filter in the program and applies the filter on server stored data. This step is either performed by first sending the filter to the server unit 4 and then receiving the filtered user data, or by first requesting and receiving user data from the server unit 4 and then applying said filter on said user data. Favorably, a plurality of user data and/or operation data of the users are received and processed by said filter. In steps 53 and 54, the resulting users are identified and a special offer for services is sent to at least one or all of said users via the server unit 4. The offer is established based on the user profile, for all users that match the filter criteria, not necessary on an individual user. In step 55, the server unit 4 sends statistic data of the offer identifying the number of signed service contracts by the user back to the terminal unit 3. In step 56, the statistic regarding the offer is analyzed on the terminal unit 3, favorably by a web interface program.

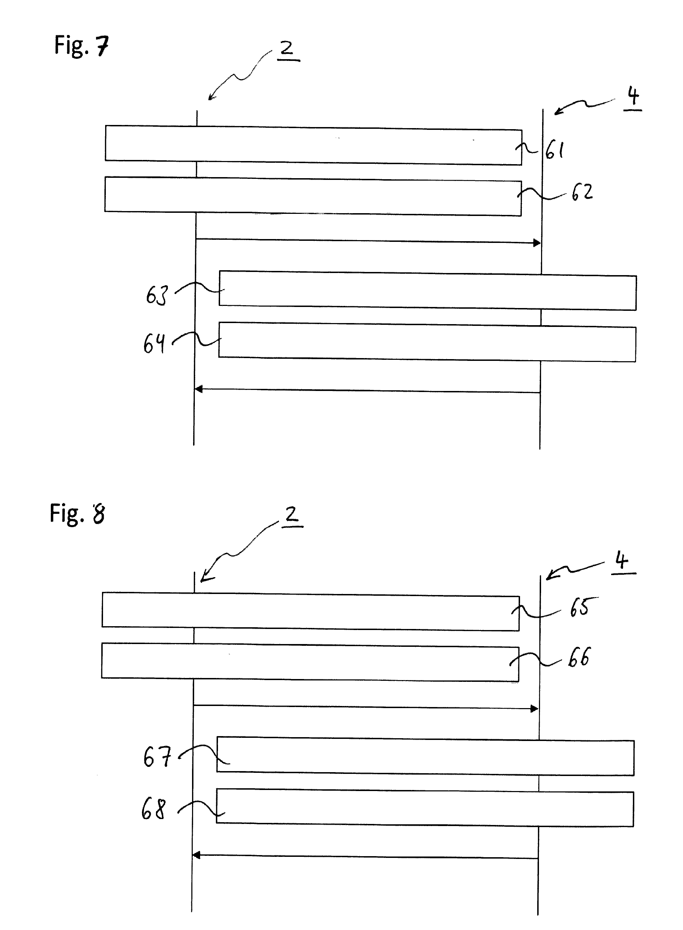

Fig. 7 shows another process diagram of a method of the present invention, wherein a second communication between the wireless communication device 2 and the server unit 4 is shown. The method comprises the steps 61 to 64 and refers to the determination of operation data and the comparison and identification of services as shown in Fig. 2.

The steps are now described in detail. In step 61, the wireless communication device 2 receives operation data which has been either logged by the device 2 or received from a cellular network 10, like in step 14 of Fig. 2. In step 62, an enquiry with the operation data is sent to the server unit 4. In step 63, the server unit 4 compares the services data stored in the server unit 4 with the operation data and identifies matching services, like in step 17 and 18 of Fig. 2. In step 64, the identified services are sent to the wireless communication device 2.

Fig. 8 shows another process diagram of a method of the present invention, wherein a third communication between a wireless communication device and a server unit is shown. The method comprises the steps 65 to 68 and refers to the determination of user data and the comparison and identification of services as shown in Fig. 2.

The steps are now described in detail. In step 65, the wireless communication device 2 receives user data which has been either input by the user or received from a cellular network 10, as in step 15 of Fig. 2. In step 66, an enquiry with the user data is sent to the server unit 4. In step 67, the server unit 4 compares the services data with the user data and identifies matching services, like in steps 17 and 18 of Fig. 2. In step 68, the identified services are sent to the wireless communication device 2.

### Reference signs

- 1: wireless communication system
- 2: wireless communication device
- 3: terminal unit
- 4: server unit
- 5: wireless transceiver unit of wireless communication device
- 6: operation data register unit of wireless communication device
- 7: user data register unit of wireless communication device
- 8: display unit of wireless communication device
- 9: input unit of wireless communication device
- 10: cellular network
- 11: calculation unit of wireless communication device
- 12: antenna
- 13: wireless communication link
- 14: determining operation data - step
- 15: determining user data - step
- 16: determining services data - step
- 17: comparing data - step
- 18: identifying services - step
- 19: selecting services - step
- 20: transceiver unit of server unit
- 21: input unit of server unit
- 22: filtering unit of server unit
- 23: comparing unit of server unit
- 24: calculation unit of server unit
- 25: storage unit of server unit
- 26: identification unit of server unit

## Claims

1. A method for selecting a cellular network service for mobile communication of a wireless communication device (2), comprising the steps of
determining operation data;
determining user data, said user data comprising information of a user and/or wireless communication preferences of a user;
determining services data, said services data comprising identification information of services and service properties;
comparing said services data with said operation data and/or said user data;
identifying services, wherein said services data match with said operation data and/or said user data; and
selecting at least one of the matching services.

2. A method according to claim 1,
wherein said step of determining operation data comprises receiving operation data from said wireless communication device (2) and/or from said at least one cellular network service.

3. A method according to claim 1 or 2,
wherein the step of determining user data comprises
receiving user data from said wireless communication device (2) as user input and/or from said at least one cellular network service.

4. A method according to one of claims 1 to 3,
wherein the step of determining services data comprises receiving services data from at least one server unit (4) storing information of said services.

5. A method according to one of claims 1 to 4,
wherein, prior to said step of receiving services data from a/the server unit (4), the following steps are performed:
sending said operation data and/or said user data to said server unit (4) by a client device, in particular by the wireless communication device (2);
filtering said sent data based on at least one filter property; and
generating said services data based on said filtered data and/or filter property.

6. A method according to claim 5,
wherein said at least one filter property is set by a server operator or by a user acting on behalf of said server operator; and
wherein said services data comprises wireless service rates and discounts input by said server operator or by a user acting on behalf of said server operator.

7. A method according to one of claims 1 to 6,
wherein the steps of comparing said services data and identifying services are performed by a/the server unit (4).

8. A method according to one of claims 1 to 6,
wherein the steps of comparing said services data and identifying services are performed on said wireless communication device (2).

9. A method according to one of claims 1 to 8,
wherein the step of selecting at least one of the matching services comprises:
displaying said identified services on said wireless communication device (2); and
receiving a user input selecting at least one of the matching services from said identified services.

10. A computer-readable medium having computer executable instructions
adapted to cause a computer to perform the method of one of the preceding claims.

11. A wireless communication device (2) configured for mobile communication
with a plurality of cellular network services, the communication device comprising:
- an operation data register unit (6) configured to log operation data;
- a user data register unit (7) configured to store user data, said user data comprising information of a user and/or wireless communication preferences of a user;
- a wireless transceiver unit (5) configured
a) to transmit said operation data and said user data to a server unit (4),
b) to request service data of services; and
c) to receive the service data from said server unit (4)_{;}
- a display unit (8) configured to display said received service data;

12. A wireless communication device (2) according to claim 11, wherein said wireless communication device further comprises an input unit (9) configured to receive a user input selecting at least one service from said displayed services.

13. A wireless communication device (2) according to claim 11 or 12, wherein said wireless communication device is further configured to select at least one of the services for mobile communication based on said wireless communication preferences of said user.

14. A wireless communication system (1) comprising
at least one wireless communication device (2) according to one of the claims 11 to 13 and
a server unit (4) configured to communicate with said at least one wireless communication device (2), comprising
- a transceiver unit (20) configured
a) to receive operation data comprising operation information of said wireless communication device and/or
b) to receive user data comprising information of a user and/or wireless communication preferences of a user;
- wherein said server unit (4) is configured to generate statistical data
based on said operation data and/or user data.

15. A wireless communication system according to claim 14,
wherein said server unit (4) further comprises
- a comparing unit (23) configured to compare services data with said operation data and/or said user data, said services data comprising identification information of services and service properties; and
- an identification unit (26) for identifying services data that match with said operation data and/or said user data;
- wherein said server unit (4) is further configured to transmit said identified services data to said wireless communication device.

16. A wireless communication system according to one of the claims 14 to 15,
wherein said server unit (4) further comprises
- an input unit (21) configured to receive an input; and
- a filtering unit (22) configured to filter said received data based on said input;
- whereby said services data are generated and/or adapted based on said filtered data.

17. A wireless communication system according to one of the claims 11 to 16,
wherein said services data comprises wireless service rates and discounts of at least one cellular network service.
